# EUROPEAN PATENT APPLICATION

(11) **EP 2 270 815 A2**
(43) Date of publication of application: **05.01.2011**
(21) Application number: 10168191.4
(22) Date of filing: 01.07.2010
(51) Int. Cl.: G21C 7/22

(54) **Nuclear reactor with inherent shutdown and associated control method**

(30) Priority: 02.07.2009 IT MI20091173
(71) Applicant: Ansaldo Nucleare S.p.A., Genova (IT)
(72) Inventor: Alemberti, Alessandro, 16159 Genova (IT); Mansani, Luigi, 57016 Rosignano Solvay (IT); Neuhold, Piero, 16036 Recco (IT)
(74) Representative: Jorio, Paolo

(57) **Abstract**

A nuclear reactor (1) having a vessel (2), a core (5) housed in the vessel, a primary coolant (4) circulating in the reactor and through the core (5) for cooling the core, and a core reactivity control system (21); the control system (21) comprises a control fluid feed system (22) configured so as to introduce a control fluid (24), in particular an inert gas lighter than the coolant, inside the core (5) in substitution of coolant (4) and reduce the volume of the core occupied by the coolant, as well as inside the dedicated conduits (38), optionally containing neutron absorbers (44). The introduction of the control fluid (24), with the consequent increase of the void in the core (5) or in the conduits (38) with neutron absorbers (44), takes the core (5) from a subcritical nominal configuration to a critical state.

## Description

The present invention concerns an inherent shutdown nuclear reactor and a method for controlling a nuclear reactor that ensures safe operation and, in particular, reliable shutdown both under normal operating conditions and in emergencies.

In particular, the invention is applied to liquid metal cooled fast nuclear reactors.

A working (i.e. critical) nuclear reactor is normally controlled by complex, active and redundant control/shutdown systems, used for both normal running and in the case of accidents. The shutting down of the reactor, i.e. it being placed in a subcritical state, whether in case of an accident or for a normal maintenance stoppage, as in the case of fuel reloading for example, is therefore handled by its active control/shutdown systems; in particular, the reactor is brought to a subcritical state through the insertion of special control/shutdown rods, which are manoeuvred by systems that require a source of energy for their operation.

However, known control systems do not appear to be fully satisfactory, most of all because they require direct interventions for being actuated and becoming operative, and can turn out to be not fully reliable as they are potentially subject to failure and malfunction.

One object of the present invention is that of overcoming the indicated drawbacks of the known art, in particular by providing a liquid metal cooled fast nuclear reactor and a control method for such a reactor that permits operation with high safety levels, without requiring particularly complex solutions.

The present invention therefore regards a nuclear reactor and a control method for a nuclear reactor as defined in basic terms in attached claims 1 and 11 respectively, as well as in the dependent claims for the preferred additional characteristics.

The nuclear reactor in accordance with the invention is therefore equipped with a control system that acts in an inverted manner with respect to what normally happens, namely bringing the reactor into operation when actuated and leaving it off or leaving it to inherently shut down (without the need of further external intervention) when it is not in operation or in the case of failure.

The invention is particularly applicable to a reactor in which the core-fuel-coolant assembly has a positive void coefficient, namely when this system is configured such that an increase in the void in the core increases the criticality (reactivity) of the core itself and, consequently, of the reactor as a whole (where "void" is intended, more properly, as the free volume of the core, i.e. the volume not occupied by structural elements, fuel elements, coolant and any absorbers or moderators that might be present).

In accordance with the invention, the core therefore has a nominal configuration (i.e. in the absence of voids) that is subcritical, while it becomes critical (i.e. power is generated) through the intervention of an active control system that creates voids in a controlled manner inside the core.

The core is therefore configured so as to be normally in a subcritical state, while it is the control system that is able to bring the reactor to a critical state (and therefore start up the reactor). In the absence of the control system, or in the case of its failure, the reactor remains or returns inherently (i.e. without the action of any active system) to a subcritical state.

This situation has an evident advantage in the case of a possible hypothetic failure of the control system, which has the effect of shutting down the reactor, contrary to what normally happens, where the loss of the control system can instead lead to accidental over-critical situations.

Advantageously, the control system exploits basic physical principles (for example, the force of gravity, the principle of communicating vessels, etc.), which is why the reactor can be defined as a "inherent shutdown" reactor. In fact, if the reactor is in a subcritical state it simply remains as such, whereas if it is in operation (i.e. in a critical state), failure of the control system brings it to a subcritical state, i.e. shuts it down.

By appropriately regulating the introduction of control fluid into the coolant and/or the conduits of the fuel elements, where suitable neutron absorbers can also be housed, the same control system can also be used to advantage for the normal control of the reactor in operation, avoiding the use of mechanisms with moving parts inside the core as contemplated in known solutions.

The control system is also advantageously equipped with suitable safety systems, preferably passive ones, which guarantee both limitation of the flow rate of control fluid introduced and limitation of the maximum attainable pressure in the conduits dedicated to creating voids, so as to render the reactor safe even in the case of voluntary insertion of voids beyond the permitted limits.

Further characteristics and advantages of the present invention will become clear from the description of the following non-limitative examples of embodiment, with reference to the attached drawings, where:
- Figure 1 is a schematic view of a nuclear reactor in accordance with the invention,
- Figures 2 and 3 are partial schematic views, with parts not to scale and parts removed for clarity, of a variant of the reactor in accordance with the invention, shown in the respective operating states, and
- Figure 4 shows the detail enclosed by the circle in Figure 3 on an enlarged scale.

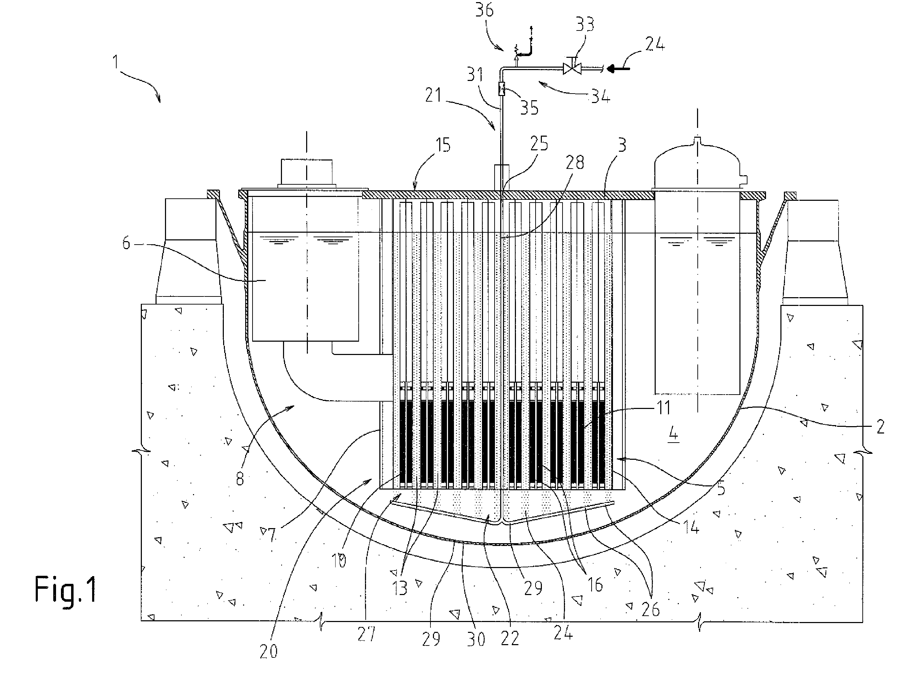

Figure 1 shows, only schematically and only with the main elements, a liquid metal cooled fast nuclear reactor 1, having a typical pool-like design.

The reactor 1 comprises a vessel 2 closed at the top by a cover 3 and containing a primary coolant 4 (for example, lead, sodium or another liquid metal) that fills the vessel 2 up to a predetermined level, defined by a free surface of the coolant 4. The vessel 2 houses a core 5, immersed in the coolant 4, at least one primary heat exchanger 6 and a conveyance structure 7 for the coolant 4; the structure 7 defines a primary circuit 8 in which the coolant 4 circulates, in a known manner, between the core 5 and the heat exchanger 6 to cool the core 4 and transfer heat outside of the reactor 1 via a secondary coolant circulating in the heat exchanger 6.

The core 5 is formed by solid constituent elements 10 comprising in particular fuel elements 11 and optionally various structural elements and/or functional elements, all known and not described or shown in detail for simplicity, and has open spaces 13 defined between the constituent elements 10 and/or inside them and available for being occupied by the coolant 4 circulating in the reactor 1.

In the non-limitative embodiment shown in Figure 1, the core 5 comprises a substantially tubular containment structure 14 that contains the constituent elements 10 of the core 5 and specifically a bundle of fuel elements 11. The fuel elements 11 extend along respective axes, substantially vertical and parallel to each other, and are supported by a support structure 15 (in the non-limitative example shown in Figure 1, the fuel elements 11 are suspended from the cover 3, but a support structure traditionally anchored to a lower portion of the vessel 2 can also be used). Each fuel element 11 is open for the circulation of coolant 4 and houses a bundle of fuel rods 16.

The reactor 1 is configured so that it has a core-fuel-coolant assembly 20 (defined as the assembly formed by the constituent elements 10 of the core 5, including the fuel material contained in the elements 11, and the coolant 4 occupying the open spaces 13) that exhibits a positive void coefficient, i.e. the assembly 20 is configured such that an increase in the void in the core 5 increases the criticality (reactivity) of the core itself and, consequently, of the reactor 1 as a whole (as already indicated, the term "void" indicates the volume of the core 5 not occupied by the constituent elements 10 or by the coolant 4, or rather the portion of the open spaces 13 not filled with coolant 4).

The core 5 has a nominal configuration (intended as the configuration in absence of voids, i.e. in which the open spaces 13 are entirely occupied by coolant 4) which is subcritical; in this configuration, the core 5 is in a subcritical state and not capable of sustaining a nuclear reaction, and hence the reactor 1 does not generate power.

The reactor 1 also comprises a control system 21 for controlling the reactivity of the core 5 and specifically for selectively bringing the core 5 to a critical state via a controlled increase of the void in the core 5.

In particular, the control system 21 comprises a control fluid feed system 22, configured so as to introduce a control fluid 24, in particular an inert gas lighter (i.e. having a lower density) than the coolant 4, inside the core 5 in substitution of the coolant 4 and thereby reduce the volume of the core 5 occupied by the coolant 4. The reduction in the volume of coolant 4 in the open spaces 13 of the core 5, where the coolant is substituted by a control fluid 24, brings the core 5 to a critical state and therefore to generate power.

The feed system 22 comprises a circuit 25 in which a pressurized control fluid 24 circulates and that has outlets 26 for diffusing the control fluid 24 in a distributed and substantially uniform manner in a predetermined zone 27 of the coolant 4.

In the non-limitative example shown in Figure 1, the circuit 25 comprises a central main conduit 28, which extends vertically downwards from the cover 3 and passes through the core 5, and lateral and/or radial distribution conduits 29 that branch from the main conduit 28 beneath the core 5 and are provided with outlets 26 positioned below the core 5, each distribution conduit 29 specifically having a plurality of nozzles 30 and/or holes distributed along the distribution conduit 29 and defining the outlets 26; the outlets 26 (or nozzles 30) are positioned and shaped in a manner so as to diffuse the control fluid 24 in substantially uniform manner within zone 27, which is essentially defined inside the containment structure 14, creating a substantially uniform mixture of coolant 4 and control fluid 24 in zone 27.

A connecting branch 31, optionally equipped with circulation means (known and not shown, e.g. a compressor) connects an upper end of the main conduit 28, through the cover 3, with a source of pressurized control fluid 24 (not shown), preferably placed outside of the vessel 2.

It is understood that the circuit 25 can be configured differently from that described herein by way of example, it being possible to include conduits and outlets shaped and distributed differently with respect to the non-limitative example shown in Figure 1. In particular, the outlets 26 could be placed inside the core 5 instead of beneath it.

The control system 21 also comprises a command device 33 (of any known type and only shown schematically in Figure 1), positioned along the circuit 25, for example on the connecting branch 31 outside the vessel 2, operable for selectively opening/closing the circuit 25 and therefore enabling or interrupting the introduction of control fluid 24 into the core 5.

The control system 21 also comprises passive-type fluid-dynamic devices 34 able to limit the introduction of control fluid 24 into the core 5. In particular, the devices 34 comprise a (known) flow-rate limiting device 35 for limiting the flow rate of the control fluid 24 introduced into the core 5 below a predetermined maximum value, and a pressure limiting device 36 (known and formed by, for example, safety valves, rupture disks, etc.) to limit the maximum attainable pressure in the circuit 25. Advantageously, but not necessarily, the devices 34 are positioned on the connecting branch 31 outside the vessel 2.

In embodying the control method of the invention, the reactor 1 is controlled in the following manner.

If the control system 21 does not introduce control fluid 24 into the reactor 1, the core 5 is in a subcritical state and therefore the reactor 1 is effectively off (it does not generate power).

To start up the reactor 1 and generate power, the control system 21 is activated and the feed system 22 introduces control fluid 24 (gas) into the core 5. The control fluid 24 is diffused in the coolant 4, specifically in zone 27, so as to form a uniform mixture of coolant 4 and control fluid 24 that is the equivalent of a generalized insertion of voids in the core 5, under the effect of which the criticality increases. The diffusion of the control fluid 24 (gas) in the coolant 4 therefore allows significant voids to be obtained in the core 5, which brings the core itself to a critical state.

Opportunely, the core 5 is configured so as to have a level of subcriticality such that, apart from being compatible with safety requirements, to reach criticality it requires the insertion of voids of an entity that does not significantly compromise the fluid-dynamic behaviour of the coolant 4 circulating in the reactor 1.

In the case of failure (malfunctioning, breakdown, etc.) of the control system 21 and/or of the feed system 22, the diffused void created in the core 5 is substituted by coolant 4 (on the basis of just the effect of gravity) in an inherent manner, causing the shutdown of the reactor 1.

To intentionally shut down the reactor 1, it is sufficient to interrupt the introduction of control fluid 24, for example, by cutting off the flow of control fluid 24 by means of the command device 33, in this case also producing the substitution of voids with coolant 4 and bringing the reactor 1 to a state of subcriticality.

Reaching an overcritical state is avoided by the presence of devices 34 that are configured so as to limit the flow rate of control fluid 24 introduced into the core 5 to the permitted values for operation in a critical state.

The control system 21 is also used for the normal running of the reactor 1: by regulating the introduction of control fluid 24 into the coolant 4 in an appropriate manner, it is in fact possible to control the criticality or reactivity of the reactor 1.

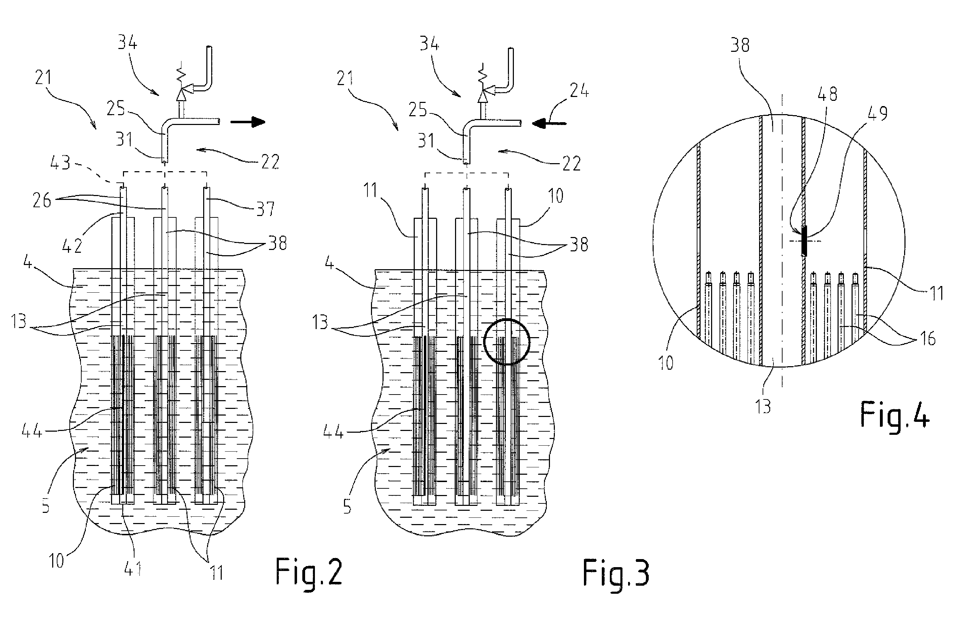

In the embodiment shown in Figures 2-4, in which similar or identical elements to those already described are indicated with the same reference numerals, the control system 21 still includes a feed system 22 for introducing control fluid 24 into the core 5; the feed system 22 comprises a circuit 25 through which pressurized control fluid 24 is introduced in a localized manner inside pipes or other adequate mechanical structures 37 housed in the core 5 and in particular, as shown in the non-limitative example in Figures 2-4, in specially provided conduits 38 placed at least partially inside the core 5.

In this version as well, the core 5 is formed by solid constituent elements 10, comprising in particular fuel elements 11 and optionally various structural elements and/or functional elements, and has open spaces 13, in this case defined inside the conduits 38 and available for being filled with the coolant 4 circulating in the reactor 1.

The conduits 38, substantially vertical for example, are housed inside respective fuel elements 11 (and/or other constituent elements 10 of the core 5) and extend upwards out of the core 5; each conduit 38 has a first and a second inlet 41 and 42 placed at the axially opposite ends (lower and upper respectively) of the conduit 38.

The first inlets 41 (lower) are immersed in the coolant 4 to allow coolant to enter and leave the conduits 38 for filling the open spaces 13; the second inlets 42 (upper) are connected to respective outlets 26 of the circuit 25 for the passage of the control fluid 24.

The outlets 26 are connected, through respective feed lines 43 converging in a connecting branch 31 (optionally equipped with known circulation means that are not shown), to a source of pressurized control fluid 24 (not shown), preferably placed outside the vessel 2.

Optionally, the conduits 38 contain neutron absorbers 44 (known, e.g. made of Hf, Eu, Cd, B, Gd or natural uranium), as schematically shown in just the first conduit 38 to the right in Figures 2 and 3.

Also in this case, the core 5 has a subcritical nominal configuration (shown in Figure 2, where the open spaces 13 are occupied by coolant 4). In this case, the reactor 1 has a core-fuel-coolant assembly 20 that might not exhibit a positive void coefficient: in fact, if the conduits 38 house neutron absorbers 44, the change in the neutron spectrum due to the emptying of the conduits 38 is such as to render the neutron absorbers 44 transparent to neutrons and therefore to increase the criticality.

As previously described, the control system 21 also comprises passive-type fluid-dynamic devices 34 able to limit the introduction of control fluid 24 into the core 5 (in particular, flow-rate limiter devices and/or pressure limiter devices), placed, for example, on the connecting branch 31 outside the vessel 2 or on each feed line 43.

In addition, as shown in Figure 4, each conduit 38 is equipped with at least one safety aperture 48, formed by passing through the side wall of the conduit 38, for example, near the upper end of the core 5 (just above the fuel rods 16) and therefore immersed in coolant 4. The apertures 48 are closed by fusible caps 49 made of a material that fuses at a predetermined temperature; the caps 49 fuse if the temperature of the coolant 4 in which they are immersed increases beyond a danger threshold, thereby opening the respective apertures 48.

In this variant as well, the reactor 1 is controlled by the control system 21 varying the void inside the core 5 and the volume of the core 5 occupied by coolant 4. However, in this case, the conduits 38 that contain coolant 4 (in the presence or otherwise of neutron absorbers 44) are used in the control method of the invention. The introduction of voids in the core 5 now takes place via the pressurization of the conduits 38: the introduction of pressurized control fluid 24 in the conduits 38 depresses the level of coolant 4 in these conduits 38, producing a neutron spectrum variation (increased by the change in absorption due to the neutron absorbers 44, as previously described) capable of bringing the reactor 1 to a critical state.

If the control system 21 does not introduce control fluid 24 into the reactor 1, the core 5 is actually in a subcritical state (Figure 2). To start up the reactor 1 and generate power, the control system 21 is activated and the feed system 22 introduces pressurized control fluid 24 (gas) into the conduits 38 (Figure 3). The control fluid 24 expels coolant 4 from the conduits 38, freeing part of the open spaces 13 and thereby inserting voids in the core 5, consequently bringing the core 5 to a state of criticality.

In the case of failure of the control system 21 and/or the feed system 22, coolant 4 starts to fill the conduits 38 again under the effect of gravity, returning the core 5 to a subcritical state (Figure 2) and thereby causing the shutdown of the reactor 1.

In the case where there is a rise in power and therefore in temperature, whatever event this is due to, when the temperature of the coolant 4 at the caps 49 reaches the danger threshold at which the material with which the caps 49 are made fuses, the caps 49 fuse, opening the apertures 48 and allowing the entrance of coolant into the conduits 38, with the consequent return of the core 5 to a subcritical state and therefore the shutdown of the reactor 1.

To intentionally shut down the reactor 1, it is sufficient to depressurize the conduits 38 (or rather, to remove the control fluid 24 from the conduits 38), by operating, for example, a command device (known and not shown).

Finally, it remains understood that further modifications and variants may be made to the nuclear reactor and associated control method described herein without departing from the scope of the invention as defined in the attached claims.

## Claims

1. A liquid metal cooled fast nuclear reactor (1), comprising a vessel (2), a core (5) housed in the vessel, a primary coolant (4) circulating in the reactor and through the core (5) for cooling the core, and a core reactivity control system (21), the reactor having a core-fuel-coolant assembly (20) that exhibits a positive void coefficient; the reactor being **characterized in that** the control system (21) comprises a control fluid feed system (22), configured so as to introduce a control fluid (24) inside the core (5), increasing the void in the core.

2. A reactor according to claim 1, wherein the core (5) has a subcritical nominal configuration and is brought to a critical state by an increase in the void in the core (5).

3. A reactor according to one of the previous claims, wherein the feed system (22) comprises a circuit (25) in which pressurized control fluid (24) circulates and having outlets (26) for introducing a control fluid in a distributed manner in a predetermined zone (27) of the coolant (4), inside the core (5) and/or beneath it; and/or in a localized manner in specially provided conduits (38) positioned at least partially inside the core (5) and optionally containing neutron absorbers (44).

4. A reactor according to claim 3, wherein the outlets (26) are shaped so as to produce a substantially uniform mixture of coolant (4) and control fluid (24) in the predetermined zone (27).

5. A reactor according to claim 3 or 4, wherein the outlets (26) are positioned beneath the core (5).

6. A reactor according to any of claims 3 to 5, wherein the feed system (22) comprises a plurality of conduits (38) placed at least partially in the core (5), optionally containing neutron absorbers (44) and having first inlets (41) for the passage of coolant (4) and second inlets (42) connected to the outlets (26) for the passage of control fluid (24).

7. A reactor according to claim 6, wherein at least some of the conduits (38) house neutron absorbers (44).

8. A reactor according to claim 6 or 7, wherein the conduits (38) and any optional respective neutron absorbers (44) are positioned inside respective fuel elements (11) of the core (5).

9. A reactor according to any of claims 3 to 8, wherein the circuit (25) is provided with safety apertures (48) closed by fusible caps (49) immersed in the coolant (4) and made of a material that fuses at a predetermined temperature.

10. A reactor according to one of the previous claims, wherein the control system (21) comprises passive-type fluid-dynamic devices (34) able to limit the introduction of control fluid (24) in the core (5), in particular a flow-rate limiting device (35) and/or a pressure limiting device (36).

11. A method for controlling a liquid metal cooled fast nuclear reactor, the reactor (1) comprising a vessel (2), a core (5) housed in the vessel, a primary coolant (4) circulating in the reactor and through the core for cooling the core, and having a core-fuel-coolant assembly (20) that exhibits a positive void coefficient; the method being **characterized by** comprising a step of controlling the reactivity of the core (5) by introducing a control fluid (24) inside the core (5) in substitution of coolant (4) and increasing the void in the core (5).

12. A method according to claim 11, wherein the core (5) has a subcritical nominal configuration and the method comprises a step of bringing the core (5) to a critical state by increasing the void in the core (5).

13. A method according to claim 11 or 12, wherein the pressurized control fluid (24) is introduced in a distributed manner in a predetermined zone (27) of the coolant (4), inside the core (5) and/or beneath it and/or in a localized manner in specially provided conduits (38) positioned at least partially inside the core (5) and optionally containing neutron absorbers (44).

14. A method according to claim 13, wherein the control fluid (24) is introduced in the coolant (4) in such a way as to produce a substantially uniform mixture of coolant (4) and control fluid (24) in the predetermined zone (27).

15. A method according to any of claims 11 to 14, comprising a step of providing conduits (38), optionally containing neutron absorbers (44), in the core (5) open to entry of the coolant (4), and a step of introducing control fluid (24) into the conduits (38) for discharging coolant (4) from the conduits (38).

16. A method according to claim 15, wherein at least some of the conduits (38) are provided with neutron absorbers (44).

17. A method according to claim 15 or 16, wherein the conduits (38), with any optional associated neutron absorbers (44), are positioned inside respective fuel elements (11) of the core (5).

18. A method according to any of claims 11 to 17, comprising a step of controlling the criticality or reactivity of the core (5) by regulating the amount of control fluid (24) introduced into the coolant (4).
